# EUROPÄISCHE PATENTSCHRIFT

(11) **EP 1 648 666 B1**
(45) Veröffentlichungstag und Bekanntmachung des Hinweises auf die Patenterteilung: **27.12.2006**
(21) Anmeldenummer: 04763332.6
(22) Anmeldetag: 19.07.2004
(51) Int. Cl.: B26B 25/00, A22B 5/20

(54) **MESSER MIT HOHLRAUM**
KNIFE WITH A CAVITY
COUTEAU COMPORTANT UNE CAVITE

(30) Priorität: 18.07.2003 DE 10333062
(43) Veröffentlichungstag der Anmeldung: 26.04.2006
(73) Patentinhaber: CFS Kempten GmbH, 87437 Kempten (DE)
(72) Erfinder: MÜLLER, Ralf, Peter, 87435 Kempten (DE)
(74) Vertreter: Wolff, Felix
(86) Internationale Anmeldenummer: PCT/EP2004/008046
(87) Internationale Veröffentlichungsnummer: WO 2005/009694

(56) Entgegenhaltungen:
- DE-U- 9 420 379
- GB-A- 586 897
- GB-A- 644 349
- US-A- 2 339 843
- US-A- 3 276 118

## Beschreibung

Die vorliegende Erfindung betrifft ein Messer zum Schneiden von Fleisch oder fleischähnlichen Produkten, Wurst, Käse und dergleichen, das aus einer Nabe und einem Schneidkörper gebildet ist. Der Schneidkörper weist mindestens einen Hohlraum auf, der vorzugsweise aus einer ersten und einer zweiten Halbschale gebildet ist. Außerdem betrifft die vorliegende Erfindung ein Verfahren zum Herstellen von Messern mit Hohlraum sowie ein Verfahren zum Detektieren von Leckagen des Hohlraums des Messers, wobei in den Hohlraum eine Flüssigkeit eingefüllt wird.

Das Dokument GB 644 349 offenbart ein Messer mit einer Nabe und einem Schneidkörper, und ein Verfahren zu seiner Herstellung. Messer, die in der industriellen Lebensmittelverarbeitung zum Schneiden von scheibenförmigen Lebensmitteln eingesetzt werden, weisen heutzutage einen sehr großen Durchmesser auf und werden mit möglichst hohen Drehzahlen betrieben, um eine möglichst hohe Schneidleistung zu erzielen. Während des Betriebes der Maschinen treten daher erhebliche Schwingungen und Kräfte auf, die einerseits zu ungleichmäßigen Schnitten führen können und andererseits eine erhebliche dynamische Beanspruchung der Maschinen- und Werkzeugkomponenten darstellen.

Aufgabe der vorliegenden Erfindung ist daher ein Messer zum Bearbeiten von Fleisch oder fleischähnlichen Produkten, Käse und dergleichen zur Verfügung zu stellen, mit dem die Beanspruchung der Maschine reduziert werden kann.

Gelöst wird die Aufgabe erfindungsgemäß durch ein Messer zum Schneiden von Fleisch oder fleischähnlichen Produkten, Käse und dergleichen, das aus einer Nabe und einem Schneidkörper gebildet ist, wobei der Schneidkörper mindestens einen Hohlraum aufweist.

Vorzugsweise ist das Messer aus mehreren Teilen zusammengefügt, die miteinander kraft- form und/oder stoffschlüssig verbunden sind. Der Schneidkörper des Messers weist vorzugsweise zwei Halbschalen auf. Eine Halbschale im Sinne der Erfindung ist ein flächiges Material, vorzugsweise ein Blech, dass sich von der Nabe ausgehend im wesentlichen radial nach außen erstreckt. Vorzugsweise ist dieses flächige Material dünnwandig. Das dünnwandige Material ist kann gebogen sein, um eine dreidimensionale Struktur zu erhalten. Der Hohlraum befindet sich vorzugsweise zwischen der ersten Halbschale und der zweiten Halbschale und kann beliebig groß gestaltet werden. Die Halbschalen werden mit der Nabe vorzugsweise kraft- form und/oder stoffschlüssig verbunden. Durch ein oder mehrere der oben genannten Maßnahmen und den daraus resultierenden Aufbau kann die Breite der Nabe und damit das Verhältnis zwischen der Breite der Nabe zum Durchmesser des Messers wunschgemäß eingestellt werden, ohne dass sich die Masse des Messers wesentlich verändert, so dass beispielsweise statisch und dynamisch sehr belastbare Messer mit einem vergleichsweise geringen Gewicht herstellbar sind. Der innere Durchmesser der Halbschalen ist vorzugsweise jeweils im Bereich axialen Endbereich der Nabe angeordnet. Die Halbschalen können auch reversibel miteinander verbunden werden.

Der Hohlraum des Messers wird vorzugsweise zumindest teilweise mit einer Detektionsflüssigkeit gefüllt, so dass Undichtigkeiten des Hohlraums detektiert werden können. Als Detektionsflüssigkeit ist jede dem Fachmann bekannte Flüssigkeit geeignet, mit der Leckagen sichtbar gemacht werden können. Insbesondere eignet sich Lebensmittelfarbe.

In einer bevorzugten Ausführungsform ist der Hohlraum des Messers zumindest teilweise mit einer Kunststofffüllung gefüllt. Dabei wird vorzugsweise ein sehr leichter und/oder geschäumter Kunststoff verwendet.

Vorzugsweise wird das Messer mit einer schließbaren Öffnung ausgestattet, die das Befüllen des Hohlraums, sowohl mit Detektionsflüssigkeit als auch mit Kunststoff ermöglicht. Der Verschluss der Öffnung kann auch reversibel erfolgen.

In einer bevorzugten Ausführungsform kann der Hohlraum durch die Öffnung mit Druck, vorzugsweise mit Überdruck beaufschlagt werden. Durch das Anlegen eines Überdrucks und bei Verwendung einer Detektionsflüssigkeit wird beim Auftreten von Leckagen im Hohlraum des Messers die Detektionsflüssigkeit aus dem Hohlraum gedrückt.

Bevorzugt liegt das Verhältnis von Nabenbreite zum Außendurchmesser des Messers im Bereich 1:3 -1:100, besonders bevorzugt im Bereich 1:4 -1:70 und ganz besonders bevorzugt 1:5 -1:13. Das Verhältnis beeinflusst die Steifigkeit des Messers. Diese bevorzugte Ausführungsform des Messers hat den Vorteil, dass das Messer wesentlich stabiler und steifer ist als Messer gemäß dem Stand der Technik.

Die Breite der Nabe beträgt vorzugsweise 10 - 300 mm besonders bevorzugt 15 - 150 mm.

Vorzugsweise sind die Halbschalen des Messers gekrümmt, wobei die eine Halbschale des Messers bevorzugt eine kleinere Krümmung aufweist, als die andere Halbschale des Messers.

Das Messer ist vorzugsweise als Kreismesser ausgeführt. Durch die Symmetrie ist ein gleichmäßiger Rundlauf des Messers möglich. Weiterhin bevorzugt ist das Messer ein Sichelmesser oder ein Spiralmesser.

In einer bevorzugten Ausführungsform weist der Schneidkörper des Messers zwei Halbschalen sowie eine Schneide auf. Bevorzugt ist die Schneide zwischen den Halbschalen eingelegt und geht dabei vorzugsweise einen Form- und/oder Kraftschluß mit den Halbschalen ein. Nach dem Zusammensetzen des Messer werden die Halbschalen und das Messer vorzugsweise stoffschlüssig miteinander verbunden. Dieser Verbund ist vorzugsweise lösbar, so dass die Schneide des Messers auswechselbar ist.

Vorzugsweise ist die Messerschneide aus gehärtetem Stahl oder Hartmetall gefertigt, während die Halbschalen bevorzugt aus rostfreiem Stahl, Leichtmetall, wie beispielsweise Aluminium, oder hochfestem Kunststoff gefertigt sind. Diese Ausführungsform der vorliegenden Erfindung hat den Vorteil, dass die verwendeten Materialien optimal angepasst können und das Gewicht des Messers dabei gering gehalten werden kann.

In einer bevorzugten Ausführungsform weisen die beiden Halbschalen den gleichen Durchmesser auf.

In einer anderen bevorzugten Ausführungsform sind die Durchmesser der beiden Halbschalen verschieden groß. In einer bevorzugten Ausführungsform kann die größere Halbschale in ihrem Randbereich als Schneide ausgebildet sein, wobei diese Halbschale dann bevorzugt aus gehärtetem Stahl oder Hartmetall gefertigt, während die andere Halbschale aus rostfreiem Stahl oder Aluminium gefertigt ist. Bei dieser Bauform der vorliegenden Erfindung ist die Anzahl der Bauteile reduziert und eine Fügestelle weniger vorhanden.

Vorzugsweise werden die Bestandteile des Messers durch Formschluß, Stoffschluß und/oder Kraftschluß miteinander verbunden. Grundsätzlich sind alle möglichen gängigen Verbindungsverfahren denkbar, jedoch werden Nieten und/oder Löten und/oder ganz besonders Kleben und/oder Schweißen bevorzugt.

Wichtig ist, dass die Fügestellen dicht sind, so dass keine Lebensmittelreste in den Hohlraum eindringen.

Vorzugsweise befinden sich zwischen den Halbschalen Rippen, Verbindungsstege und/oder leichte Stützmaterialien, um die Steifigkeit des Messers zu optimieren.

Bevorzugt sind im Messer Hülsen eingesetzt, die zum Auswuchten des Messers verwendet werden. Die Hülsen können gleichzeitig als Stützmaterial dienen.

In einer bevorzugten Ausführungsform der vorliegenden Erfindung ist in mindestens einem Hohlraum ein Temperierungsmittel angeordnet ist, mit dem das Messer zumindest teilweise temperiert; d.h. erwärmt oder gekühlt werden kann.

Mit dem erfindungsgemäßen Hohlmesser lassen sich Lebensmittel wie beispielsweise Wurst, Schinken oder Käse sehr gut aufschneiden. Vorzugsweise sind die Lebensmittel strangförmig.

In einer bevorzugten Ausführungsform der vorliegenden Erfindung sind die Halbschalen des Schneidkörpers unterschiedlich gestaltet. Diese Unterschiede können sich auf das Material, die Form und/oder die Materialstärke der Halbschalen beziehen. Durch die Unterschiedlichkeit der den Hohlraum umfassenden Teile, ist eine gezielte Veränderung der Lage der Messerschneide in axialer Lage relativ zur Nabe und/oder der Winkel der Messerschneide relativ zur Nabe möglich. Die Veränderung der Lage der Messerschneide kann durch Temperieren des Messers und einer unterschiedlichen Ausdehnung der beiden Halbschalen und/oder durch eine Beaufschlagung des Messerhohlraums mit Druck erfolgen, wobei sich die beiden Halbschalen ihre Form unterschiedlich verändem.

Das erfindungsgemäße Messer ist wesentlich stabiler als Messer gemäß dem Stand der Technik und kann optimal für den jeweiligen Anwendungsfall gestaltet werden. Es weist ein geringeres Gewicht auf als Messer gemäß dem Stand der Technik. Durch das erfindungsgemäße Messer wird die Schneidemaschine weniger beansprucht. Dass Messer ist einfach und kostengünstig herzustellen. Leckagen des Hohlraums werden sicher erkannt.

Ein weiterer Gegenstand der vorliegenden Erfindung ist eine Ausfschneidemaschine beliebiger Art aufweisend das erfindungsgemäße Messer.

Ein anderer Gegenstand der vorliegenden Erfindung ist ein Verfahren zur Herstellung von Messern, die einen Hohlraum im Schneidkörper und eine Nabe aufweisen, bei dem die Bestandteile des Messers nacheinander ineinandergelegt werden und bei dem die Bestandteile des Messers durch Formschluß, Stoffschluß und/oder Kraftschluß miteinander verbunden werden. Dies ist ein sehr einfaches, kostengünstiges und schnell durchführbares Verfahren zur Herstellung des Messers.

Ein weiterer Gegenstand der vorliegenden Erfindung ist ein Verfahren, mit dem Leckagen in Messern mit Hohlraum im Schneidkörper detektiert werden können. Bei dem Verfahren ist der Hohlraum des Messers zumindest teilweise mit einer Detektionsflüssigkeit gefüllt, die aus dem Messer austritt, wenn der Hohlraum undicht ist. Dadurch kann eine Leckage von außen detektiert werden.

Bevorzugt wird das Messer in dem Verfahren einem Unterdruck ausgesetzt, wodurch die Detektionsflüssigkeit aus dem Hohlraum gedrückt wird, wenn eine undichte Stelle im Hohlraum vorhanden ist.

Besonders bevorzugt in dem Verfahren wird in dem Hohlraum ein Überdruck erzeugt, wodurch die Detektionsflüssigkeit aus dem Hohlraum gedrückt wird, wenn eine undichte Stelle im Hohlraum vorhanden ist.

Die Überwachung der Leckagen ist vorzugsweise auch im Betrieb des Messers möglich. Dadurch können Undichtigkeiten des Messers sofort festgestellt werden.

In einer bevorzugten Ausführungsform wird in dem Verfahren die Detektionsflüssigkeit mithilfe einer Überwachungsvorrichtung detektiert. Beispielsweise kann als Detektionsflüssigkeit handelsübliche Lebensmittelfarbe eingesetzt werden. Dann ist als Überwachungsvorrichtung eine Bilddatenüberwachung, z. B. eine Videoüberwachungsanlage einsetzbar.

Bevorzugt wird bei dem Verfahren der Schneidvorgang sofort unterbrochen, wenn die Detektionsflüssigkeit an den Produkten detektiert wird.

Das Auftreten von undichten Stellen wie Risse im Messer wird durch das oben beschriebene Verfahren sofort detektiert. Das Auftreten von kontaminierten Lebensmitteln durch Lebensmittelreste im Hohlraum des Messers wird verhindert und somit der Produktion von Ausschuß von vomherein vorgebeugt.

Im folgenden wird die Erfindung anhand der **Figuren 1-6** erläutert. Diese Erläuterungen sind lediglich beispielhaft und schränken den allgemeinen Erfindungsgedanken nicht ein.
- **Figur 1**: zeigt einen Querschnitt durch ein Messer einer möglichen Bauform.
- **Figur 2**: zeigt den Querschnitt gemäß Figur 1 mit einer Bohrung.
- **Figur 3**: zeigt eine vergrößerte Teilansicht A aus dem Querschnitt des Messers gemäß Figur 2.
- **Figur 4**: zeigt einen Querschnitt einer anderen Bauform des Messers mit Kunststofffüllung
- **Figur 5**: zeigt eine Aufsicht des erfindungsgemäßen Messers.
- **Figur 6**: zeigt ein erfindungsgemäßes Messer mit einer asymetrischen Gestaltung.

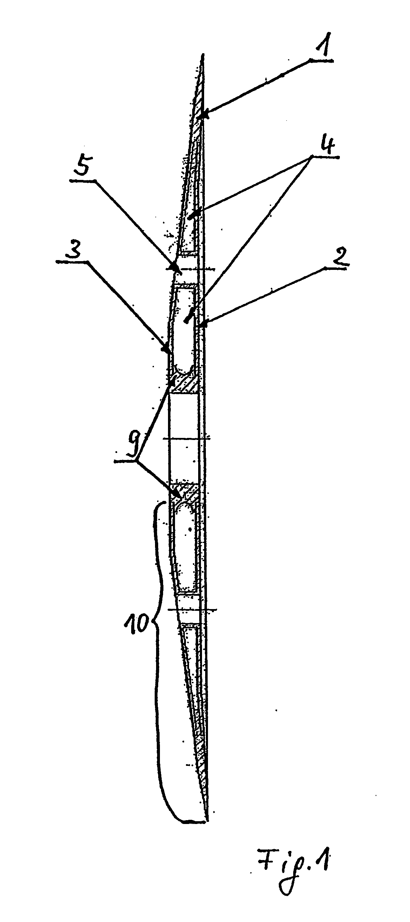

In **Figur 1** ist ein Querschnitt durch eine mögliche Bauform des Messers dargestellt. Die Abbildung zeigt die Aufteilung des Messers in Nabe 9 und Schneidkörper 10. Die Messerschneide 1 ist zwischen zwei Halbschalen 2, 3 gleichen Durchmessers eingesetzt. Die Halbschalen sind gekrümmt, wobei die Krümmung der ersten Halbschale 2, die sich an der dem Schneidgut zugewandten Seite befindet, kleiner ist, als die Krümmung der zweiten Halbschale. Zwischen den Halbschalen 2, 3 ist der Hohlraum 4 sichtbar. In das Messer sind Hülsen 5 zum Auswuchten und als Stützmaterial eingesetzt.

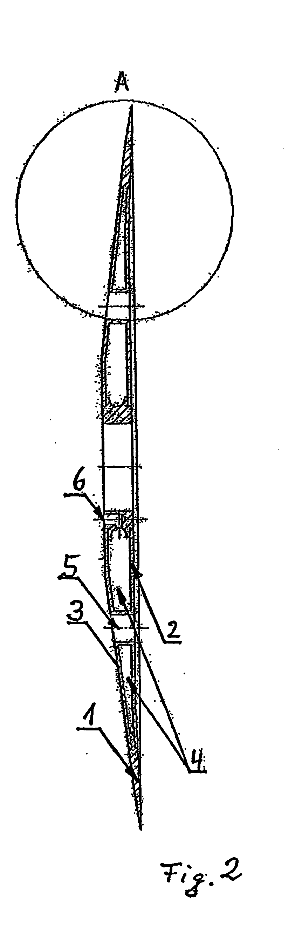

**Figur 2** zeigt im wesentlichen den Querschnitt gemäß **Figur 1.** Zusätzlich ist hier jedoch die Öffnung 6 zu sehen, durch die der Hohlraum 4 befüllt werden kann und durch der Hohlraum 4 mit Druck, bevorzugt mit Überdruck beaufschlagt werden kann.

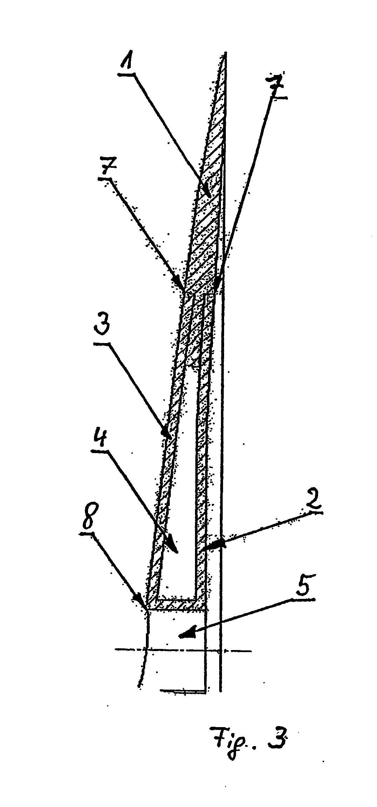

In **Figur 3** ist der Ausschnitt A aus **Figur 2** vergrößert dargestellt. Hier sind die Fügestellen 7 zwischen der Messerschneide 1 und den Halbschalen 2, 3 sichtbar, die bevorzugt geklebt oder verschweißt werden, sowie die Fügestelle 8 zwischen einer eingesetzten Hülse 5 und den Halbschalen 2, 3, die bevorzugt verschweißt wird. In der Zeichnung ist außerdem insbesondere die Form der Schneide 1 dargestellt. Die Verlängerung der Schneide 1 zwischen den Halbschalen 2, 3 ist nach innen hin verbreitert. Dadurch ist die Schneide 1 mit den Halbschalen 2,3 form- und/oder kraftschlüssig verbunden. Die Kräfte verteilen sich entlang der gesamten Kontaktfläche zwischen Halbschalen 2, 3 und Schneide 1. Der Verbund zwischen Halbschalen und Schneide ist so gestaltet, dass Lebensmittel schwerer in den Hohlraum 4 eindringen können.

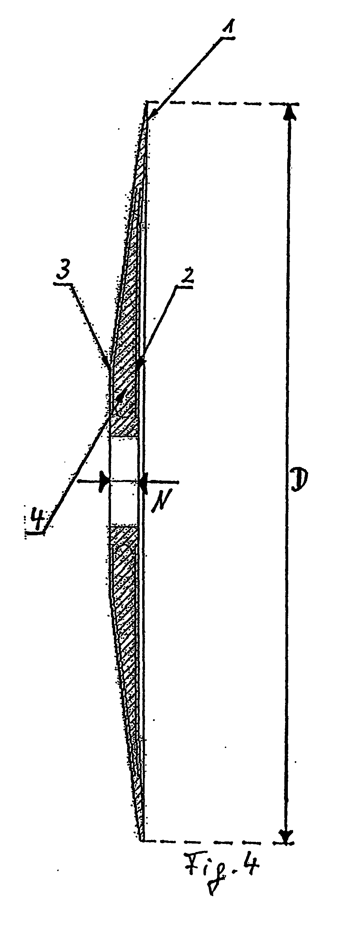

**Figur 4** zeigt einen Querschnitt einer anderen Bauform des Messers, die sich von der Bauform der vorherigen Figuren darin unterscheidet, dass der Hohlraum 4 mit einem Kunststoff, vorzugsweise einem geschäumten Kunststoff gefüllt ist. Der Kunststoff verhindet das Eindringen von Schneidgut in den Hohlraum. In dieser Figur ist außerdem beispielhaft für alle Figuren das Verhältnis N:D der Breite der Nabe N zum Außendurchmesser D des Messer verdeutlicht.

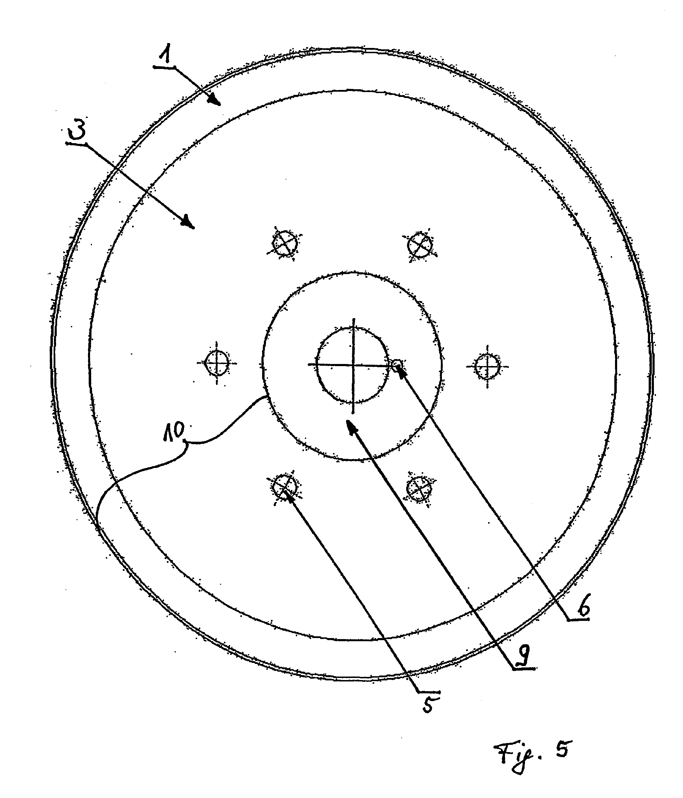

**Figur 5** zeigt eine Aufsicht des erfindungsgemäßen Messers. Es zeigt den Aufbau des Messers bestehend aus der Nabe 9 und dem Schneidkörper 10. Vom Schneidkörper ist eine Halbschale 3 und die Messerschneide 1 sichtbar, die an die Halbschale 3 angefügt ist. In die Halbschalen sind Hülsen 5 eingesetzt, die zum Auswuchten des Messers und als Stützmaterial verwendet werden können. Sichtbar ist ebenfalls die Öffnung 6, die zum Befüllen des Hohlraums 4 mit Kunststoff oder Detektionsflüssigkeit verwendet werden kann und durch die ein Druck, bevorzugt ein Überdruck im Hohlraum 4 hergestellt werden kann.

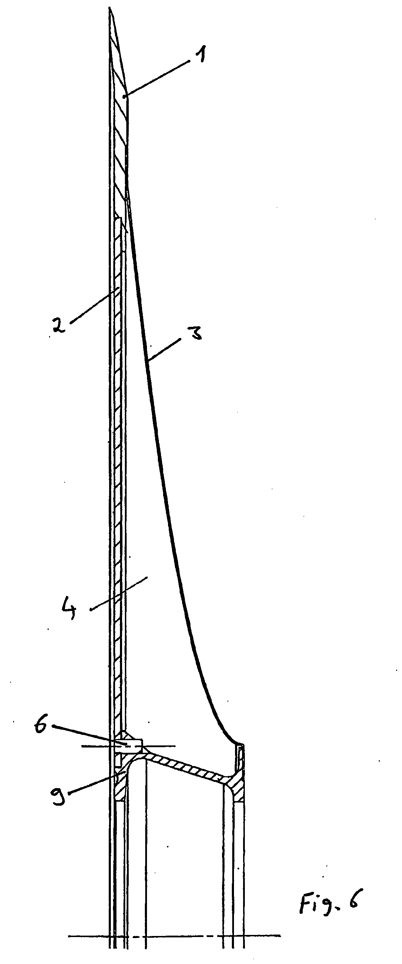

**Figur 6** zeigt eine weitere Ausführungsform des erfindungsgemäßen Messers, dass eine Schneide 1 und zwei Halbschalen 2, 3 aufweist, Die Halbschale 2 ist in dem vorliegenden Fall wesentlich dünner als die Halbschale 1 ausgeführt und weist eine geschwungene dreidimensinale Form auf. Wird beispielsweise an den Anschluß 6 ein Überdruck angelegt, wird die geschwungene Form zumindest teilweise reversibel aus der Halbschale 2 rausgedrückt und die Schneide 2 des Messers relativ zur Nabe nach links gedrückt. Durch Unterdruck kann die Dreidimensionale Form der Halbschale 2 noch verstärkt werden, was in einer Bewegung der Schneide 2 relativ zur Nabe nach rechts resultiert.

Dieselben Effekte lassen sich erzielen, wenn für die beiden Halbschalen Materialien mit unterschiedlichen Wärmeausdehnungskoeffizienten eingesetzt werden und in den Hohlraum 4 heiße oder kalte Medien eingefüllt werden.

Beide Ausführungsform gemäß Figur 6 insbesonders jedoch die erstbeschriebene eignen sich beispielsweise zur Schneidspalteinstellung.

### Bezugszeichenliste:

- 1: Schneide des Messers
- 2: Erste Halbschale, die zum Schneidgut hingewendet ist
- 3: Zweite Halbschale
- 4: Hohlraum zwischen den Halbschalen
- 5: Hülse zum Auswuchten und als Stützmaterial
- 6: Öffnung zum Einfüllen von aufschäumbarem Kunststoff und/oder Detektionsflüssigkeit und zum Herstellen von Überdruck im Hohlraum
- 7: Fügestelle zwischen Schneide und Halbschalen, beispielsweise Kleben oder Schweißen
- 8: Fügestelle zwischen Hülse und Halbschalen, beispielsweise Kleben oder Schweißen
- 9: Nabe des Messers
- 10: Schneidkörper des Messers
- N: Nabenbreite des Messers
- D: Außendurchmesser des Messers

## Patentansprüche

1. Messer zum Schneiden von Fleisch, Wurst oder Käse sowie fleischähnlichen Produkten mit einer Nabe (9) und einem Schneidkörper (10), **dadurch gekennzeichnet, dass** der Schneidkörper (10) mindestens einen Hohlraum (4) aufweist.

2. Messer nach Anspruch 1, **dadurch gekennzeichnet, dass** es aus mehreren Teilen besteht und/oder der Schneidkörper zwei Halbschalen (2, 3) aufweist.

3. Messer nach einem der vorherigen Ansprüche, **dadurch gekennzeichnet, dass** der Hohlraum (4) durch die erste Halbschale (2) und die zweite Halbschale (3) gebildet ist.

4. Messer nach einem der vorherigen Ansprüche, **dadurch gekennzeichnet, dass** der Hohlraum (4) zumindest teilweise mit einer Detektionsflüssigkeit gefüllt ist.

5. Messer nach einem der vorherigen Ansprüche, **dadurch gekennzeichnet, dass** der Hohlraum (4) zumindest teilweise mit einer Kunststofffüllung gefüllt ist.

6. Messer nach einem der vorherigen Ansprüche, **dadurch gekennzeichnet**, der Hohlraum (4) eine reversibel schließbare Öffnung (6) aufweist.

7. Messer nach Anspruch 6, **dadurch gekennzeichnet, dass** die Öffnung (6) für die Herstellung eines Über- oder Unterdrucks im Hohlraum (4) geeignet ist.

8. Messer nach einem der vorherigen Ansprüche, **dadurch gekennzeichnet, dass** das Verhältnis von Nabenbreite (N) zum Außendurchmesser der Schneide (D) im Bereich von 1:3 -1:100, bevorzugt im Bereich von 1:4 -1:70 liegt und ganz besonders bevorzugt im Bereich von 1:5 -1:13 ist.

9. Messer nach einem der vorherigen Ansprüche, **dadurch gekennzeichnet, dass** die Nabenbreite (N) 10 - 300 mm beträgt, vorzugsweise 15-150 mm.

10. Messer nach einem der Ansprüche 2-9, **dadurch gekennzeichnet, dass** die Halbschalen gekrümmt sind und dass die erste Halbschale (2) eine kleinere Krümmung aufweist, als die zweite Halbschale (3).

11. Messer nach einem der vorherigen Ansprüche, **dadurch gekennzeichnet, dass** das Messer ein Kreismesser, Sichelmesser oder Spiralmesser ist.

12. Messer nach einem der vorherigen Ansprüche, **dadurch gekennzeichnet, dass** der Schneidkörper (10) zwei Halbschalen (2, 3) und eine Schneide (1) aufweist.

13. Messer nach Anspruch 12, **dadurch gekennzeichnet, dass** die Schneide (1) zwischen den Halbschalen (2, 3) eingesetzt ist.

14. Messer nach einem der Ansprüche 11 -13, **dadurch gekennzeichnet, dass** die beiden Halbschalen (2, 3) den gleichen Durchmesser aufweisen.

15. Messer nach einem der Ansprüche 11-13, **dadurch gekennzeichnet, dass** die eine Halbschale (2, 3) einen größeren Durchmesser aufweist, als die andere Halbschale (2, 3).

16. Messer nach einem der Ansprüche 12-13, daduch **gekennzeichnet**, dass die Schneide (1) aus gehärtetem Stahl, Hochleistungsschnellarbeitsstahl (HSS), Hartmetall oder Keramik gefertigt ist.

17. Messer nach einem der Ansprüche 2-16, **dadurch gekennzeichnet, dass** die Halbschalen (2, 3) aus Stahl, rostfreiem Stahl, Aluminium, Titan und hochfeste Kunststoffe (faserverstärkt) gefertigt sind.

18. Messer nach Anspruch 15, **dadurch gekennzeichnet, dass** der Randbereich der größeren der beiden Halbschalen (2) als Schneide (1) ausgebildet ist.

19. Messer nach Anspruch 18, **dadurch gekennzeichnet, dass** die größere Halbschale (2) mit Schneide aus gehärtetem Stahl oder Hartmetall gefertigt ist und dass die andere Halbschale (3) aus rostfreiem Stahl oder Aluminium gefertigt ist.

20. Messer nach einem der vorherigen Ansprüche, **dadurch gekennzeichnet, dass** die Bestandteile des Messers durch Formschluß, Stoffschluß und/oder Kraftschluß (7, 8) miteinander verbunden sind.

21. Messer nach einem der vorherigen Ansprüche, **dadurch gekennzeichnet, dass** die Bestandteile des Messers dicht miteinander verbunden sind.

22. Messer nach einem der vorherigen Ansprüche, **dadurch gekennzeichnet, dass** es Rippen, Verbindungsstege und/oder Stützmaterialien zwischen den Halbschalen (2, 3) aufweist.

23. Messer nach einem der vorherigen Ansprüche, **dadurch gekennzeichnet, dass** es Hülsen (5) zum Auswuchten aufweist.

24. Messer nach einem der voranstehenden Ansprüche, **dadurch gekennzeichnet, dass** in mindestens einem Hohlraum ein Temperierungsmittel angeordnet ist, mit dem das Messer zumindest teilweise temperierbar ist.

25. Aufschneidemaschine aufweisend ein Messer nach einem der Ansprüche 1 - 24.

26. Verfahren zur Herstellung von Messern mit einem Hohlraum (4) in einem Schneidkörper (10), **dadurch gekennzeichnet, dass** das Messer eine Nabe (9) aufweist und dass die Bestandteile des Messers (1, 2. 3, 9) ineinandergelegt und durch Formschluss, Stoffschluss und/oder Kraftschluss (7, 8) miteinander verbunden werden.

27. Verfahren zum Detektieren von Leckagen in Messern mit Hohlraum (4) im Schneidkörper (10), **dadurch gekennzeichnet, dass** in den Hohlraum (4) des Messers zumindest teilweise eine Detektionsflüssigkeit eingefüllt wird, die aus dem Messer austritt, wenn der Hohlraum (4) undicht ist.

28. Verfahren nach Anspruch 27, **dadurch gekennzeichnet, dass** der Hohlraum, in dem sich die Detektionsflüssigkeit befindet, unter Überdruck gesetzt wird.

29. Verfahren nach Anspruch 27, **dadurch gekennzeichnet, dass** das Messer einem Unterdruck ausgesetzt wird.

30. Verfahren nach einem der Ansprüche 27 - 29, **dadurch gekennzeichnet, dass** die Leckagen im Betrieb des Messers überwacht werden.

31. Verfahren nach einem der Ansprüche 27 - 30, **dadurch gekennzeichnet, dass** das Austreten der Detektionsflüssigkeit aus dem Messer mithilfe einer geeigneten Überwachungsvorrichtung detektiert wird.

32. Verfahren nach einem der Ansprüche 27-31, **dadurch gekennzeichnet, dass** der Schneidvorgang beendet wird, wenn die Detektionsflüssigkeit detektiert wird.

## Claims

1. A blade for cutting meat, sausage or cheese and meat-like products, having a hub (9) and a cutting body (10), **characterised in that** the cutting body (10) comprises at least one cavity (4).

2. A blade according to claim 1, **characterised in that** it consists of a plurality of parts and/or the cutting body comprises two half-shells (2, 3).

3. A blade according to either one of the preceding claims, **characterised in that** the cavity (4) is formed by the first half-shell (2) and the second half-shell (3).

4. A blade according to any one of the preceding claims, **characterised in that** the cavity (4) is at least partially filled with a detection fluid.

5. A blade according to any one of the preceding claims, **characterised in that** the cavity (4) is at least partially filled with a plastics filling.

6. A blade according to any one of the preceding claims, **characterised in that** the cavity (4) comprises a reversibly closable opening (6).

7. A blade according to claim 6, **characterised in that** the opening (6) is suitable for producing an overpressure or reduced pressure in the cavity (4).

8. A blade according to any one of the preceding claims, **characterised in that** the ratio of the hub width (N) to the external diameter of the cutting edge (D) is in the range from 1:3-1:100, preferably in the range from 1:4-1:70 and very particularly preferably in the range from 1:5-1:13.

9. A blade according to any one of the preceding claims, **characterised in that** the hub width (N) amounts to 10-300 mm, preferably 15-150 mm.

10. A blade according to any one of claims 2-9, **characterised in that** the half-shells are curved and **in that** the first half-shell (2) exhibits a smaller curvature than the second half-shell (3).

11. A blade according to any one of the preceding claims, **characterised in that** the blade is a circular blade, a crescent-shaped blade or a helical blade.

12. A blade according to any one of the preceding claims, **characterised in that** the cutting body (10) comprises two half-shells (2, 3) and a cutting edge (1).

13. A blade according to claim 12, **characterised in that** the cutting edge (1) is inserted between the half-shells (2, 3).

14. A blade according to any one of claims 11-13, **characterised in that** the two half-shells (2, 3) exhibit the same diameter.

15. A blade according to any one of claims 11-13, **characterised in that** one half-shell (2, 3) exhibits a larger diameter than the other half-shell (2, 3).

16. A blade according to any one of claims 12-13, **characterised in that** the cutting edge (1) is made of hardened steel, high speed steel (HSS), hard metal or ceramics.

17. A blade according to any one of claims 2-16, **characterised in that** the half-shells (2, 3) are made from steel, stainless steel, aluminium, titanium and high-strength plastics (fibre-reinforced).

18. A blade according to claim 15, **characterised in that** the edge area of the larger of the two half-shells (2) takes the form of a cutting edge (1).

19. A blade according to claim 18, **characterised in that** the larger half-shell (2) with cutting edge is made from hardened steel or hard metal and **in that** the other half-shell (3) is made of stainless steel or aluminium.

20. A blade according to any one of the preceding claims, **characterised in that** the components of the blade are connected together interlockingly, by material bonding and/or frictionally (7, 8).

21. A blade according to any one of the preceding claims, **characterised in that** the components of the blade are connected together in leakproof manner.

22. A blade according to any one of the preceding claims, **characterised in that** it comprises ribs, connecting webs and/or supporting materials between the half-shells (2, 3).

23. A blade according to any one of the preceding claims, **characterised in that** it comprises bushes (5) for balancing purposes.

24. A blade according to any one of the preceding claims, **characterised in that** a temperature-control medium is arranged in at least one cavity, with which medium the blade may be at least partially temperature-controlled.

25. A slicing machine comprising a blade according to any one of claims 1-24.

26. A method of producing blades with a cavity (4) in a cutting body (10), **characterised in that** the blade comprises a hub (9) and **in that** the components of the blade (1, 2, 3, 9) are inserted in one another and connected together interlockingly, by material bonding and/or frictionally (7, 8).

27. A method of detecting leakage in blades with a cavity (4) in the cutting body (10), **characterised in that** the cavity (4) of the blade is at least partially filled with a detection fluid, which escapes from the blade if the cavity (4) has a leak.

28. A method according to claim 27, **characterised in that** the cavity, in which the detection fluid is located, is placed under overpressure.

29. A method according to claim 27, **characterised in that** the blade is exposed to a reduced pressure.

30. A method according to any one of claims 27-29, **characterised in that** leakage is monitored when the blade is in operation.

31. A method according to any one of claims 27-30, **characterised in that** escape of the detection fluid from the blade is detected with the aid of a suitable monitoring device.

32. A method according to any one of claims 27-31, **characterised in that** the cutting process is terminated if the detection fluid is detected.

## Revendications

1. Couteau pour couper de la viande, des saucisses ou du fromage ainsi que des produits semblables à la viande, avec un moyeu (9) et un corps de coupe (10), **caractérisé en ce que** le corps de coupe (10) présente au moins un espace creux (4).

2. Couteau selon la revendication 1, **caractérisé en ce qu'**il se compose de plusieurs pièces et/ou que le corps de coupe présente deux demi-coques (2, 3).

3. Couteau selon l'une quelconque des revendications précédentes, **caractérisé en ce que** l'espace creux (4) est formé par la première demi-coque (2) et la deuxième demi-coque (3).

4. Couteau selon l'une quelconque des revendications précédentes, **caractérisé en ce que** l'espace creux (4) est au moins partiellement rempli d'un liquide de détection.

5. Couteau selon l'une quelconque des revendications précédentes, **caractérisé en ce que** l'espace creux (4) est au moins partiellement rempli d'une charge de plastique.

6. Couteau selon l'une quelconque des revendications précédentes, **caractérisé en ce que** l'espace creux (4) présente une ouverture (6) pouvant être fermée de manière réversible.

7. Couteau selon la revendication 6, **caractérisé en ce que** l'ouverture (6) est appropriée pour créer une surpression ou une dépression dans l'espace creux (4).

8. Couteau selon l'une quelconque des revendications précédentes, **caractérisé en ce que** le rapport de la largeur du moyeu (N) au diamètre extérieur de la lame de coupe (D) est de l'ordre de 1:3 à 1:100, de préférence de 1:4 à 1:70, et particulièrement préférablement de l'ordre de 1:5 à 1:13.

9. Couteau selon l'une quelconque des revendications précédentes, **caractérisé en ce que** la largeur du moyeu (N) vaut 10 à 300 mm, de préférence 15 à 150 mm.

10. Couteau selon l'une quelconque des revendications 2 à 9, **caractérisé en ce que** les demi-coques sont courbées et **en ce que** la première demi-coque (2) présente une plus faible courbure que la deuxième demi-coque (3).

11. Couteau selon l'une quelconque des revendications précédentes, **caractérisé en ce que** le couteau est un couteau circulaire, un couteau en forme de faucille ou un couteau en spirale.

12. Couteau selon l'une quelconque des revendications précédentes, **caractérisé en ce que** le corps de coupe (10) présente deux demi-coques (2, 3) et une lame de coupe (1).

13. Couteau selon la revendication 12, **caractérisé en ce que** la lame de coupe (1) est insérée entre les demi-coques (2, 3).

14. Couteau selon l'une quelconque des revendications 11 à 13, **caractérisé en ce que** les deux demi-coques (2, 3) présentent le même diamètre.

15. Couteau selon l'une quelconque des revendications 11 à 13, **caractérisé en ce que** l'une des demi-coques (2, 3) présente un plus grand diamètre que l'autre demi-coque (2, 3).

16. Couteau selon l'une quelconque des revendications 12 à 13, **caractérisé en ce que** la lame de coupe (1) est fabriquée en acier trempé, en acier rapide (HSS), en métal dur ou en céramique.

17. Couteau selon l'une quelconque des revendications 2 à 16, **caractérisé en ce que** les demi-coques (2, 3) sont fabriquées en acier, en acier inoxydable, en aluminium, en titane et en plastiques hautement résistants (renforcés par des fibres).

18. Couteau selon la revendication 15, **caractérisé en ce que** la région du bord de la plus grande des deux demi-coques (2) est réalisée sous forme de lame de coupe (1).

19. Couteau selon la revendication 18, **caractérisé en ce que** la plus grande demi-coque (2) avec la lame de coupe est fabriquée en acier trempé ou en métal dur et **en ce que** l'autre demi-coque (3) est fabriquée en acier inoxydable ou en aluminium.

20. Couteau selon l'une quelconque des revendications précédentes, **caractérisé en ce que** les composants du couteau sont assemblés les uns aux autres par engagement par coopération de forme, par coopération de matière et/ou par force (7, 8).

21. Couteau selon l'une quelconque des revendications précédentes, **caractérisé en ce que** les composants du couteau sont assemblés hermétiquement les uns aux autres.

22. Couteau selon l'une quelconque des revendications précédentes, **caractérisé en ce qu'**il présente des cannelures, des nervures de liaison et/ou des matériaux de support entre les demi-coques (2, 3).

23. Couteau selon l'une quelconque des revendications précédentes, **caractérisé en ce qu'**il présente des douilles (5) pour l'équilibrage.

24. Couteau selon l'une quelconque des revendications précédentes, **caractérisé en ce qu'**un moyen de mise à température est disposé dans au moins un espace creux, avec lequel le couteau peut être mis à température au moins partiellement.

25. Machine de coupe présentant un couteau selon l'une quelconque des revendications 1 à 24.

26. Procédé de fabrication de couteaux comprenant un espace creux (4) dans un corps de coupe (10), **caractérisé en ce que** le couteau présente un moyeu (9) et **en ce que** les composants du couteau (1, 2, 3, 9) sont emboîtés les uns dans les autres et sont assemblés les uns aux autres par engagement par coopération de forme, par coopération de matière et/ou par force (7, 8).

27. Procédé de détection de fuites dans des couteaux avec un espace creux (4) dans le corps de coupe (10), **caractérisé en ce que** dans l'espace creux (4) du couteau est introduit au moins en partie un liquide de détection qui sort du couteau lorsque l'espace creux (4) n'est pas étanche.

28. Procédé selon la revendication 27, **caractérisé en ce que** l'espace creux dans lequel se trouve le liquide de détection est surpressurisé.

29. Procédé selon la revendication 27, **caractérisé en ce que** le couteau est soumis à une dépression.

30. Procédé selon l'une quelconque des revendications 27 à 29, **caractérisé en ce que** les fuites sont contrôlées au cours du fonctionnement du couteau.

31. Procédé selon l'une quelconque des revendications 27 à 30, **caractérisé en ce que** la sortie du liquide de détection hors du couteau est détectée à l'aide d'un dispositif de contrôle approprié.

32. Procédé selon l'une quelconque des revendications 27 à 31, **caractérisé en ce que** l'opération de coupe est terminée si l'on détecte du liquide de détection.
